# EUROPEAN PATENT APPLICATION

(11) **EP 4 769 631 A1**
(43) Date of publication of application: **01.07.2026**
(21) Application number: 24920837.2
(22) Date of filing: 30.01.2024
(51) Int. Cl.: H01M 10/0587, H01M 10/0585

(54) **BATTERY AND ELECTRICAL DEVICE**

(71) Applicant: Honor Device Co., Ltd., Shenzhen, Guangdong 518040 (CN)
(72) Inventor: WANG, Yong, Shenzhen, Guangdong 518040 (CN); DENG, Xutong, Shenzhen, Guangdong 518040 (CN)
(74) Representative: Goddar, Heinz J.
(86) International application number: PCT/CN2024/074766
(87) International publication number: WO 2025/160762

(57) **Abstract**

Embodiments of this application provide a battery and a power consuming device. The battery includes a battery cell, where the battery cell is a wound cell, and the battery cell includes a positive electrode plate, a negative electrode plate, and a separator that are arranged in a laminating manner; and the battery cell includes a first surface and a second surface oppositely arranged along a thickness direction of the battery cell; a reference electrode, where the reference electrode includes a third current collector and an electrode material layer arranged on a surface of one side of the third current collector; the reference electrode is arranged on the first surface or the second surface of the battery cell; and the reference electrode is configured to form a test loop with the positive electrode plate and/or the negative electrode plate to test an electrical parameter of the battery; and an isolator, arranged between the battery cell and the reference electrode. In the battery, the reference electrode is arranged on a surface of the battery cell, to implement high-accuracy real-time monitoring of a reaction status of a positive electrode and a negative electrode inside the battery, thereby improving a service life and safety performance of the battery. The reference electrode does not affect an original capacity and charging and discharging performance of the battery. In addition, a preparation process of the battery is simple, and has a high matching degree with a commercial production process and production equipment of an existing battery, which is beneficial to implementing large-scale production.

## Description

### TECHNICAL FIELD

This application relates to the technical field of batteries and power consuming devices, and in particular, to a battery having a reference electrode and a power consuming device having the battery.

### BACKGROUND

In recent years, with a continuous increase in parameters of a lithium-ion battery such as an energy density, a charging and discharging rate, and a battery capacity, a great challenge is brought to safety performance of the battery. In the industry, an inherent set of charging and discharging procedures is usually developed for a charging and discharging process of the lithium-ion battery, and the charging and discharging procedures are relatively safe in an early use stage of the battery. However, when aging of the battery or an abnormal condition of the battery causes an increase in internal resistance, an originally set charging procedure may cause lithium precipitation from a negative electrode, causing a safety problem. If electrical parameters such as a voltage, internal resistance, a current, and the like that can reflect a reaction status of a positive electrode and a negative electrode inside the lithium-ion battery can be monitored in real time, a charging and discharging current of the battery can be adjusted in time to improve a service life of the battery, and an abnormal behavior of the lithium-ion battery can be warned in time to avoid occurrence of a safety accident However, it is relatively difficult to monitor, in real time, the electrical parameters that can reflect the reaction status of the internal positive electrode and the internal negative electrode in an operation process of the lithium-ion battery, and there is no mature commercial solution in the industry at present.

### SUMMARY

In view of this, embodiments of this application provide a battery and a power consuming device. In the battery, a reference electrode is arranged on a surface of a battery cell, to implement high-accuracy real-time monitoring of a reaction status of a positive electrode and a negative electrode inside the battery, thereby improving a service life and safety performance of the battery. The reference electrode does not affect an original capacity and charging and discharging performance of the battery. In addition, a preparation process of the battery is simple, and has a high matching degree with a commercial production process and production equipment of an existing battery, which is beneficial to implementing commercial large-scale production.

A first aspect of embodiments of this application provides a battery. The battery includes a battery cell, a reference electrode, and an isolator arranged between the battery cell and the reference electrode to isolate the battery cell from the reference electrode, where the battery cell includes a first surface and a second surface oppositely arranged along a thickness direction of the battery cell; the reference electrode is arranged on the first surface or the second surface of the battery cell; the reference electrode includes a third current collector and an electrode material layer arranged on a surface of one side of the third current collector, where one side of the electrode material layer is arranged close to the isolator; and the reference electrode is configured to form a test loop with a positive electrode plate and/or a negative electrode plate to test an electrical parameter of the battery. In the battery, the reference electrode may form the test loop with the positive electrode plate and the negative electrode plate, to monitor the electrical parameter that reflects a reaction status of a positive electrode and a negative electrode inside the battery in real time with relatively high test accuracy. Therefore, based on the monitored electrical parameter, parameters such as a charging current and a charging voltage of the battery may be adjusted in time to adjust a charging and discharging status of the battery, thereby improving a service life and safety performance of the battery, and avoiding occurrence of a safety accident caused by excessively fast aging of the battery and abnormal charging and discharging of the battery. According to the battery having the reference electrode provided in this embodiment of this application, introduction of the reference electrode does not affect an original capacity and charging and discharging performance of the battery. In addition, according to the battery having the reference electrode provided in this embodiment of this application, a change trend of positive electrode impedance and negative electrode impedance after aging of the battery can be obtained, to provide data reference for subsequent design optimization of the battery. According to the battery having the reference electrode provided in the embodiments of this application, the reference electrode has a simple structure and a simple arrangement process, and has a high matching degree with a commercial production process and production equipment of an existing battery. Therefore, there is no need to change an existing battery cell preparation process, and there is no need to add a complex operation procedure and production equipment, which is beneficial to implementing large-scale production based on an existing production line.

In an implementation of this application, the battery cell may be a wound cell or a laminated battery cell. In an implementation of this application, the electrode material layer includes a reference electrode active material, a conductive agent, and a binder. In a battery whose battery cell is a wound cell, the reference electrode active material may include lithium iron phosphate LiFePO₄ and/or lithium titanate Li₄Ti₅O₁₂; or in a battery whose battery cell is a laminated battery cell, the reference electrode active material may include lithium titanate Li₄Ti₅O₁₂. The material LiFePO₄ and the material Li₄Ti₅O₁₂ has features of good cycle stability, chemical stability, and reversibility. In a lithium de-intercalation reaction process, LiFePO₄ and Li₄Ti₅O₁₂ have a relatively wide voltage platform, and are used as reference electrode active materials for preparing the reference electrode. In a charging and discharging process of the battery, a change of an SOC (State of Charge) of the battery has relatively small impact on the voltage platform, so that the reference electrode can well maintain a constant potential during a cycle process of the battery. Using the voltage platform as a reference voltage can effectively reflect an absolute voltage between a positive electrode and a negative electrode, to obtain a more accurate electrode potential and a more accurate impedance value.

In an implementation of this application, D50 particle sizes of LiFePO₄ and Li₄Ti₅O₁₂ range from 1 nm to 100 nm. The D50 particle size refers to a corresponding particle size when a cumulative particle size distribution percentage of samples reaches 50%, and D50 is also referred to as a median diameter or a median particle size. The reference electrode is made of nano-sized lithium iron phosphate LiFePO₄ and/or nano-sized lithium titanate Li₄Ti₅O₁₂, which has better cycle stability, chemical stability, and reversibility, so that internal resistance of the reference electrode is greatly reduced, a polarization effect of the reference electrode is eliminated, and parameters of the positive electrode and the negative electrode inside the battery, such as electric potentials, impedance, and the like can be more accurately measured. In addition, the material can be better adhered to a current collector by coating the binder on the current collector, to avoid a phenomenon of falling off of an active material in a cycle process.

In an implementation of this application, a thickness of the electrode material layer ranges from 1 µm to 5 µm. Design of an ultra-thin electrode material layer is beneficial to being stably bonded to a surface of the third current collector, thereby avoiding distortion of an electrical parameter measurement result caused by falling off of the reference electrode active material during the cycle process of the battery, and improving test stability and reliability of the reference electrode.

In an implementation of this application, the third current collector includes any one of a copper foil, a carbon-coated copper foil, a copper mesh, a nickel mesh, and carbon cloth. The reference electrode uses a structure in which the third current collector is loaded with the electrode material layer, to facilitate formation of a reference electrode tab through welding by using the third current collector.

In an implementation of this application, a material of the isolator includes any one of a polyolefin separator, a polyolefin aluminum oxide composite separator, and a polymer-based solid electrolyte. The foregoing material of the isolator is a conventional battery separator material, which is easy to obtain, and can effectively isolate the battery cell from the reference electrode.

In an implementation of this application, an orthographic projection of the reference electrode in the thickness direction of the battery cell is located within an orthographic projection of the first surface or the second surface on which the reference electrode is located in the thickness direction of the battery cell. This design is beneficial to fixing the reference electrode and the battery cell, and can also better match an original size design of the battery.

In an implementation of this application, when a battery capacity is 1000 mAh, an area of the orthographic projection of the reference electrode in the thickness direction of the battery cell is greater than or equal to 30% of an area of the orthographic projection of the first surface or the second surface on which the reference electrode is located in the thickness direction of the battery cell; and when the battery capacity is (1000+C) mAh, the area of the orthographic projection of the reference electrode in the thickness direction of the battery cell is greater than or equal to X% of the area of the orthographic projection of the first surface or the second surface in which the reference electrode is located in the thickness direction of the battery cell, where C is greater than 0, and X%=30%+(C/1000)10%. This design may better monitor take into account installation convenience and reliability of the reference electrode and total weight design and costs of the battery while monitor the electrical parameters of the battery accurately.

In an implementation of this application, the reference electrode at least partially covers a middle region of the first surface or the second surface on which the reference electrode is located. The reference electrode is arranged in the middle region of the first surface or the second surface, which is beneficial to ensuring monitoring accuracy while reducing a size of the reference electrode to facilitate positioning and installation and optimize a weight of the battery.

In an implementation of this application, the reference electrode at least partially covers a center line of the first surface or the second surface on which the reference electrode is located, and regions of the reference electrode on two sides of the center line are symmetrical about the center line, where the center line is perpendicular to a winding direction of the battery cell. The symmetrical design may better ensure the monitoring accuracy while reduce the size of the reference electrode to optimize the weight of the battery, so that the monitoring accuracy is ensured by designing a reference electrode whose size is as small as possible.

In an implementation of this application, the reference electrode includes a first end portion and a second end portion oppositely arranged in a direction perpendicular to a bottom sealing end surface or a top sealing end surface of the battery cell, where at least one of the first end portion and the second end portion extends to be close to the bottom sealing end surface or the top sealing end surface of the battery cell. This design facilitates fixing the reference electrode and the battery cell by using a top sealing adhesive layer and/or a bottom sealing adhesive layer while top-sealing and bottom-sealing is performed on the battery cell.

In an implementation of this application, the positive electrode plate includes a positive electrode current collector and a positive electrode active layer arranged on a surface of the positive electrode current collector, and the negative electrode plate includes a negative electrode current collector and a negative electrode active layer arranged on a surface of the negative electrode current collector; and the positive electrode plate further includes a positive electrode tab electrically connected to the positive electrode current collector, the negative electrode plate further includes a negative electrode tab electrically connected to the negative electrode current collector, and the reference electrode further includes a reference electrode tab electrically connected to the third current collector.

In an implementation of this application, the positive electrode tab and the negative electrode tab are arranged at end portions of the battery cell, and the reference electrode tab is arranged at an end portion of the reference electrode, to facilitate connection to an external circuit.

In an implementation of this application, the battery further includes a battery protection board, and the positive electrode tab, the negative electrode tab, and the reference electrode tab are respectively connected to the battery protection board through welding, where the battery protection board is connected to the positive electrode tab and the reference electrode tab to form the test loop, and/or the battery protection board is connected to the negative electrode tab and the reference electrode tab to form the test loop, to obtain the electrical parameter of the battery. The battery protection board may adjust the charging and discharging status of the battery in time after obtaining the real-time electrical parameter of the battery, to protect the battery.

In an implementation of this application, the battery protection board is further configured to adjust the charging and discharging status of the battery according to the electrical parameter of the battery. By adjusting the charging and discharging status of the battery in time, the service life of the battery may be improved, and occurrence of phenomena such as a short circuit may be avoided.

In an implementation of this application, a positive electrode contact point, a negative electrode contact point, and a reference electrode contact point are arranged on the battery protection board, where the positive electrode tab, the negative electrode tab, and the reference electrode tab are respectively electrically connected to the positive electrode contact point, the negative electrode contact point, and the reference electrode contact point.

In an implementation of this application, the battery further includes an adhesive layer, and the adhesive layer is configured to fix the reference electrode, the isolator, and the battery cell together. Fixing is performed by using the adhesive layer, which is easy to operate.

In an implementation of this application, the battery further includes a housing, and the battery cell, the reference electrode, and the isolator are accommodated in the housing. The housing may protect the battery cell and the like which are accommodated in the housing.

In an implementation of this application, the battery further includes an electrolyte solution, and the electrolyte solution is accommodated in the housing.

A second aspect of the embodiments of this application provides a preparation method of a battery having a reference electrode. The method includes:

preparing an electrode active layer and a reference electrode tab on a third current collector, to obtain the reference electrode;

arranging an isolator on a surface of one side in a thickness direction of a battery cell, and then placing the reference electrode on the isolator; and

fixing the battery cell, the isolator, and the reference electrode together.

In an implementation of this application, the preparation method further includes:

encapsulating the battery cell, the isolator, and the reference electrode that are fixed together by using a housing material, injecting an electrolyte solution to obtain an encapsulated battery cell, and welding the encapsulated battery cell to a battery protection board, to obtain the battery.

The preparation method of the battery provided in the embodiments of this application has a simple process, and has a high matching degree with a commercial production process and production equipment of an existing battery. Therefore, there is no need to change an existing battery cell preparation process, and there is no need to add a complex operation procedure and production equipment, which is beneficial to implementing large-scale production based on an existing production line.

An embodiment of this application further provides a power consuming device, where the power consuming device includes a power consuming module and the battery according to the first aspect of the embodiments of this application, and the battery is configured to supply power to the power consuming module. The use of the foregoing battery is beneficial for the power consuming device to monitor a health status of the battery, determine parameters such as an appropriate charging voltage, an appropriate charging current, an appropriate charging speed, and an appropriate charging time, and can also predict a service life of the battery, thereby improving safety and reliability of the power consuming device.

### BRIEF DESCRIPTION OF DRAWINGS

FIG. 1 is a schematic structural diagram of a battery 100 according to an embodiment of this application;
FIG. 2 is a schematic structural diagram of a battery 100 according to an embodiment of this application;
FIG. 3A is a schematic cross-sectional structural view of a reference electrode 20 according to an embodiment of this application;
FIG. 3B is a schematic diagram of laminated positions of a reference electrode 20 and a battery cell 10 according to an embodiment of this application;
FIG. 4 is a schematic structural diagram of a battery 100 according to another embodiment of this application;
FIG. 5 is a schematic structural diagram of a battery 100 according to another embodiment of this application;
FIG. 6 is a schematic structural diagram of a battery 100 according to another embodiment of this application;
FIG. 7 is a schematic structural diagram of a battery 100 according to another embodiment of this application;
FIG. 8 is a schematic structural diagram of a battery 100 according to an embodiment of this application;
FIG. 9 is a schematic diagram of arrangement of a tab at an end portion of a wound cell according to an embodiment of this application;
FIG. 10 is a schematic diagram of arrangement of a tab at an end portion of a laminated battery cell according to an embodiment of this application;
FIG. 11 is a schematic structural diagram of a reference electrode 20 according to an embodiment of this application;
FIG. 12 is a schematic diagram of arrangement of a tab at an end portion of a wound cell according to another embodiment of this application;
FIG. 13 is a schematic diagram of arrangement of a tab at an end portion of a wound cell according to another embodiment of this application;
FIG. 14 is a schematic diagram of arrangement of a tab at an end portion of a wound cell according to another embodiment of this application; and
FIG. 15 is a flowchart of a preparation method of a battery according to an embodiment of this application.

### DESCRIPTION OF EMBODIMENTS

The following describes embodiments of this application in detail with reference to the accompanying drawings.

A reaction status of a positive electrode and a negative electrode inside a lithium-ion battery directly determine a health status and safety performance of the battery. By monitoring the reaction status of the positive electrode and the negative electrode inside the battery in real time, a parameter such as a charging and discharging current of the battery may be adjusted in time to avoiding excessively fast aging of the battery and improve a service life of the battery, and an abnormal behavior of the lithium-ion battery can be warned in time to avoid occurrence of a safety accident. However, it is relatively difficult to monitor, in real time, electrical parameters that can reflect the reaction status of the internal positive electrode and the internal negative electrode in an operation process of the lithium-ion battery and there is no mature commercial solution in the industry at present. To resolve the foregoing problem, an embodiment of this application provides a battery. In the battery, a reference electrode is arranged on a surface of a wound cell, to implement high-accuracy real-time monitoring of a reaction status of a positive electrode and a negative electrode inside the battery, thereby improving a service life and safety performance of the battery. The reference electrode does not affect an original capacity and charging and discharging performance of the battery. In addition, a preparation process of the battery is simple, and has a high matching degree with a commercial production process and production equipment of an existing battery, which is beneficial to implementing commercial large-scale production.

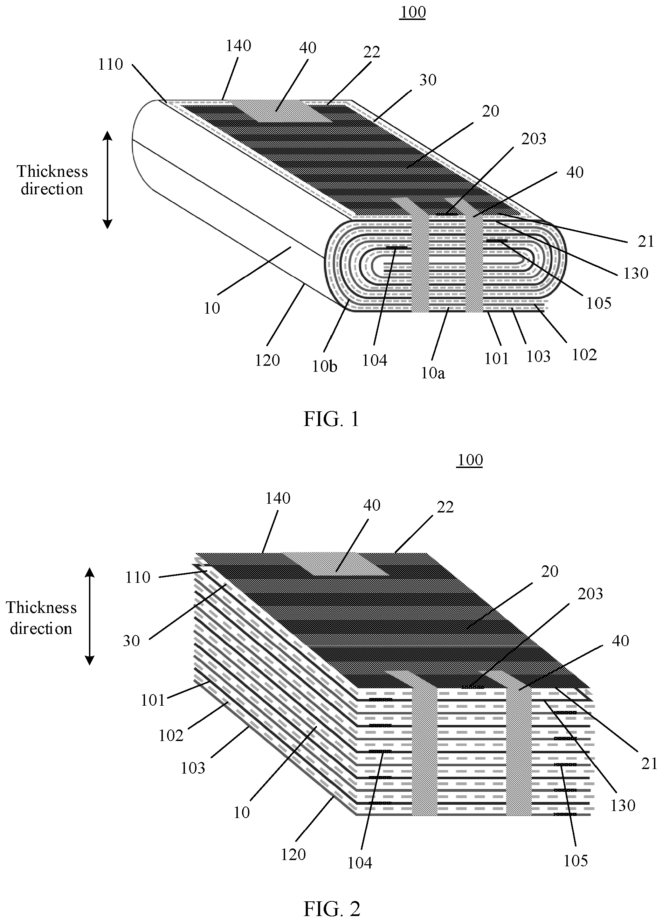

Referring to FIG. 1 and FIG. 2, FIG. 1 is a schematic structural diagram of a battery 100 according to an implementation of this application, and FIG. 2 is a schematic structural diagram of a battery 100 according to another implementation of this application. The battery 100 includes:
a battery cell 10, where the battery cell 10 includes a first surface 110 and a second surface 120 oppositely arranged along a thickness direction of the battery cell;
in the implementation shown in FIG. 1, the battery cell 10 is a wound cell, and the battery cell 10 includes a positive electrode plate 101, a negative electrode plate 102, and a separator 103 that are arranged in a laminating and winding manner, where the separator 103 is arranged between the positive electrode plate 101 and the negative electrode plate 102, to isolate the positive electrode plate 101 from the negative electrode plate 102; and in the implementation shown in FIG. 2, the battery cell 10 is a laminated battery cell, and the battery cell 10 includes a positive electrode plate 101, a negative electrode plate 102, and a separator 103 that are arranged in a laminating manner, where the separator 103 is arranged between the positive electrode plate 101 and the negative electrode plate 102, to isolate the positive electrode plate 101 from the negative electrode plate 102;
a reference electrode 20, where the reference electrode 20 is arranged on the first surface 110 or the second surface 120 of the battery cell 10; and the reference electrode 20 is configured to form a test loop with the positive electrode plate 101 and/or the negative electrode plate 102, to test an electrical parameter of the battery 100; and
an isolator 30, arranged between the battery cell 10 and the reference electrode 20, to isolate the battery cell 10 and the reference electrode 20.

According to the battery 100 having the reference electrode provided in the embodiments of this application, the reference electrode 20 may form the test loop with the positive electrode plate 101 and the negative electrode plate 102, to monitor the electrical parameter that reflects a reaction status of a positive electrode and a negative electrode inside the battery 100 in real time with relatively high test accuracy. Therefore, based on the monitored electrical parameter, parameters such as a charging current and a charging voltage of the battery can be adjusted in time to adjust a charging and discharging status of the battery, thereby improving a service life and safety performance of the battery and avoiding occurrence of a safety accident caused by excessively fast aging of the battery and abnormal charging and discharging of the battery.

The electrical parameter may include a positive electrode absolute potential, a negative electrode absolute potential, positive electrode alternating current impedance, negative electrode alternating current impedance, positive electrode direct current impedance, negative electrode direct current impedance, and the like. The positive electrode absolute potential and the negative electrode absolute potential may reflect battery status information that cannot be reflected by a voltage difference between the positive electrode and the negative electrode. An excessively high positive electrode absolute potential and an excessively high negative electrode absolute potential are not beneficial to safe charging. By monitoring the positive electrode absolute potential or the negative electrode absolute potential in real time, accuracy of monitoring of a battery status can be improved, so that the battery status is better regulated in time, a possibility of excessively quick charging is reduced, lithium precipitation and a short circuit caused when the negative electrode absolute potential is less than 0 V are avoided, and irreversible damage to a positive electrode material and battery bulging caused when the positive electrode absolute potential exceeds a preset value are avoided, thereby facilitating delaying aging of the battery and improving safety of the battery. Specifically, for example, in a charging process of the battery, when it is detected that the current negative electrode absolute potential of the battery is greater than a preset potential, a charging current of the battery may be reduced, so that the battery returns to a safe charging state.

According to the battery 100 having the reference electrode provided in the embodiments of this application, the reference electrode 20 is not arranged between the positive electrode plate 101 and the negative electrode plate 102 of the battery cell 10, so that there is no problem that in a charging and discharging process of the battery, lithium ions are deposited on a surface of the reference electrode 20, to further affect an original capacity and balance of the battery. That is, introduction of the reference electrode 20 in this application does not affect the original capacity, internal resistance, a voltage, charging and discharging performance, a cycle life, safety performance, and the like of the battery. In addition, according to the battery 100 having the reference electrode provided in the embodiments of this application, a status of the battery 100 in an entire life cycle can be obtained, and a change trend of positive electrode impedance and negative electrode impedance after aging of the battery can be obtained, to provide data reference for subsequent design optimization of the battery. According to the battery 100 having the reference electrode provided in the embodiments of this application, the reference electrode 20 has a simple structure and a simple arrangement process, and has a high matching degree with a commercial production process and production equipment of an existing battery. Therefore, there is no need to change an existing battery cell preparation process, and there is no need to add a complex operation procedure and production equipment, which is beneficial to implementing large-scale production based on an existing production line.

Referring to FIG. 1, the battery cell 10 is a wound cell, and the wound cell is a wound-type battery cell. In this embodiment, the battery cell 10 includes a flat region 10a and bent regions 10b connected to two ends of the flat region 10a. The thickness direction of the battery cell 10 is a laminated direction of the positive electrode plate 101, the separator 103, and the negative electrode plate 102 in the flat region 10a. Electrode plates of the wound-type battery cell and the separator are continuously integrated, which has high manufacturing efficiency, and few edges, so that it is convenient to control burrs and improve safety The wound-type battery cell may enable the battery to have a smaller volume, a high energy density, good stability, and relatively good heat dissipation performance.

Referring to FIG. 2, the battery cell 10 is a laminated battery cell. In this embodiment, the thickness direction of the battery cell 10 is a laminated direction of the positive electrode plate 101, the separator 103, and the negative electrode plate 102. The laminated battery cell may include a plurality of layers of positive electrode plates 101 and a plurality of layers of negative electrode plates 102 that are alternately laminated, and separators 103 arranged between the positive electrode plates 101 and the negative electrode plates 102.

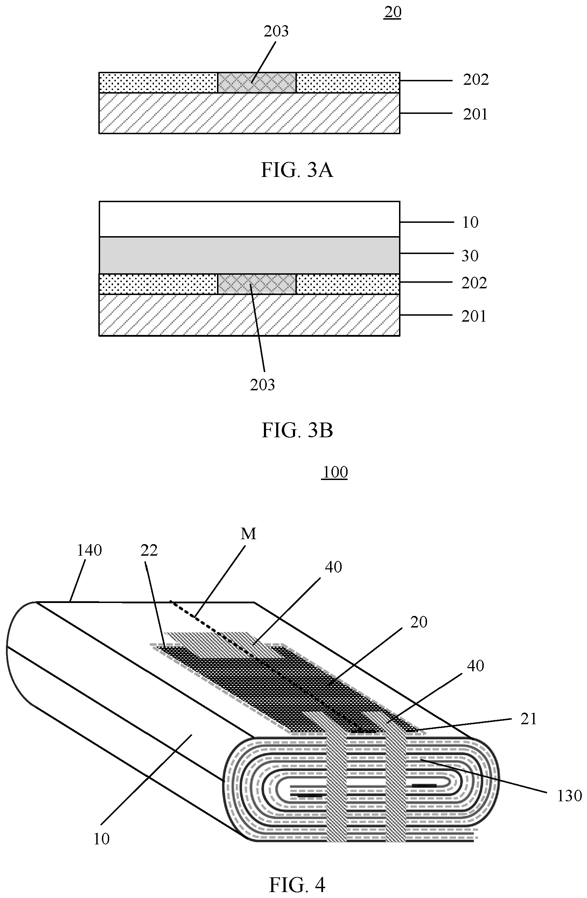

Referring to FIG. 3A and FIG. 3B, FIG. 3A is a schematic cross-sectional structural view of a reference electrode 20 according to an embodiment of this application, and FIG. 3B is a schematic diagram of laminated positions of a reference electrode 20 and a battery cell 10 according to an embodiment of this application. The reference electrode 20 includes a third current collector 201 and an electrode material layer 202 arranged on a surface of one side of the third current collector 201, where one side of the electrode material layer 202 of the reference electrode 20 is arranged close to the isolator 30. A structure of the reference electrode 20 in this application is similar to a structure of a conventional positive electrode and negative electrode, and the reference electrode may be prepared by coating the electrode material layer 202 on a surface of the third current collector 201. In this structure, a reference electrode tab may be conveniently formed through welding by using the third current collector 201, thereby forming a tight and reliable welding connection to a battery protection board. The structure also facilitates cutting the reference electrode into various required shape sizes according to a requirement in an actual production process for easy use.

In this application, the battery 100 may be specifically a lithium-ion battery.

In an implementation of this application, the electrode material layer 202 includes a reference electrode active material. In a battery whose battery cell is a wound cell, the reference electrode active material may include lithium iron phosphate LiFePO₄ and/or lithium titanate Li₄Ti₅O₁₂. In a battery whose battery cell is a laminated battery cell, the reference electrode active material may include lithium titanate Li₄Ti₅O₁₂. The material LiFePO₄ and the material Li₄Ti₅O₁₂ have features of good cycle stability, chemical stability, and reversibility. In a lithium de-intercalation reaction process, LiFePO₄ and Li₄Ti₅O₁₂ have a relatively wide voltage platform, and are used as reference electrode active materials for preparing the reference electrode. In a charging and discharging process of the battery, a change of an SOC (State of Charge) of the battery has relatively small impact on the voltage platform, so that the reference electrode can well maintain a constant potential during a cycle process of the battery. Using the voltage platform as a reference voltage can effectively reflect an absolute voltage between a positive electrode and a negative electrode, to obtain a more accurate electrode potential and a more accurate impedance value.

In an implementation of this application, LiFePO₄ and Li₄Ti₅O₁₂ have a nanoscale size, and D50 particle sizes of LiFePO₄ and Li₄Ti₅O₁₂ may range from 1 nm to 100 nm. In some embodiments, the D50 particle sizes of LiFePO₄ and Li₄Ti₅O₁₂ may be, but are not limited to, 1 nm, 5 nm, 10 nm, 15 nm, 20 nm, 25 nm, 30 nm, 35 nm, 40 nm, 45 nm, 50 nm, 55 nm, 60 nm, 65 nm, 70 nm, 75 nm, 80 nm, 85 nm, 90 nm, 95 nm, or 100 nm. The reference electrode 20 is made of nano-sized lithium iron phosphate LiFePO₄ and/or nano-sized lithium titanate Li₄Ti₅O₁₂, which has better cycle stability, chemical stability, and reversibility, so that internal resistance of the reference electrode 20 is greatly reduced, a polarization effect of the reference electrode 20 is eliminated, and electrical parameters inside the battery, such as a positive electrode absolute potential, a negative electrode absolute potential, positive electrode alternating current impedance, negative electrode alternating current impedance, positive electrode direct current impedance, negative electrode direct current impedance, and the like can be more accurately measured and obtained. In addition, the material can be better adhered to a current collector by coating a binder on the current collector, to avoid a phenomenon of falling off of an active material in a cycle process.

In an implementation of this application, a thickness of the electrode material layer 202 may range from 1 µm to 5 µm. In some embodiments, the thickness of the electrode material layer 202 may be, but is not limited to, 1 µm, 1.5 µm, 2 µm, 2.5 µm, 3 µm, 3.5 µm, 4 µm, 4.5 µm, or 5 µm. Design of an ultra-thin electrode material layer 202 is beneficial to being stably bonded to a surface of the third current collector 201, thereby avoiding distortion of an electrical parameter measurement result caused by falling off of the reference electrode active material during the cycle process of the battery, and improving stability and reliability of the reference electrode in testing the electrical parameters of the battery.

In an implementation of this application, the third current collector 201 is made of a conductive material, which is configured to collect currents. The third current collector 201 may be any one of a copper foil, a carbon-coated copper foil, a copper mesh, a nickel mesh, and carbon cloth. A thickness of the third current collector 201 may range from 5 µm to 10 µm, and specifically may be, but is not limited to, 5 µm, 6 µm, 7 µm, 8 µm, 9 µm, or 10 µm. The reference electrode 20 uses a structure in which the third current collector 201 is loaded with the electrode material layer 202, and the third current collector 201 is prepared by using the foregoing material, so that a reference electrode tab is formed through welding by using the third current collector 201.

In an implementation of this application, the electrode material layer 202 further includes a conductive agent and a binder. The conductive agent may be, but is not limited to, any one or more of conductive carbon black, a carbon nanotube, grapheme, and Ketjen black. The binder may be, but is not limited to, any one or more of polyvinylidene fluoride (PVDF), sodium carboxymethyl cellulose (CMC), styrenebutadiene rubber (SBR), polyacrylic acid (PAA), a cyanoacrylate binder (CA), and polyacrylonitrile (PAN). In the electrode material layer 202, the reference electrode active material, the conductive agent, and the binder are uniformly mixed and distributed. The conductive agent is configured for constructing a conductive network, and the binder is configured for binding the components together. In an implementation of this application, in the electrode material layer 202, a mass percentage of the reference electrode active material may range from 90% to 96%, for example, may be, but is not limited to, 90%, 91%, 92%, 93%, 94%, 95%, or 96%; a mass percentage of the conductive agent may range from 1% to 10%, for example, may be, but is not limited to, 1%, 2%, 3%, 4%, 5%, 6%, 7%, 8%, 9%, or 10%; and a mass percentage of the binder may range from 1% to 10%, for example, may be, but is not limited to, 1%, 2%, 3%, 4%, 5%, 6%, 7%, 8%, 9%, or 10%. In some embodiments, a mass ratio of the reference electrode active material to the conductive agent to the binder may be, but is not limited to, 90:5:5, 90:6:4, or 90:7:3.

In this application, a structural design of the reference electrode 20 is the same as a structural design of a conventional positive electrode plate and negative electrode plate, and may be prepared by using a same operation as that of the positive electrode plate and negative electrode plate, without adding additional equipment.

In an implementation of this application, the first surface 110 and the second surface 120 in the thickness direction of the battery cell 10 are flat surfaces. Referring to FIG. 1, FIG. 2, FIG. 4, FIG. 5, FIG. 6, and FIG. 7, FIG. 4, FIG. 5, FIG. 6, and FIG. 7 are schematic structural diagrams of a battery 100 according to another embodiment of this application. In an implementation of this application, an orthographic projection of the reference electrode 20 in the thickness direction of the battery cell 10 is located within an orthographic projection of the first surface 110 or the second surface 120 on which the reference electrode 20 is located in the thickness direction of the battery cell 10. That is, the orthographic projection of the reference electrode 20 in the thickness direction of the battery cell 10 may be less than or equal to the orthographic projection of the first surface 110 or the second surface 120 on which the reference electrode 20 is located in the thickness direction of the battery cell 10. This design is beneficial to fixing the reference electrode 20 and the battery cell 10, and can also better match original size design of the battery.

The size design and arrangement position of the reference electrode 20 affect, to some extent, monitoring accuracy of the electrical parameters of the battery that are monitored based on the reference electrode 20 and difficulty of positioning and installation. The reference electrode 20 of a relatively large size can avoid a problem such as voltage jump caused by uneven coating of a local active material, and can more accurately measure an absolute voltage between the positive electrode and the negative electrode. The reference electrode 20 of a relatively small size can be better positioned and installed during a manufacturing process, and is more beneficial to optimizing a total weight of the battery.

To better ensure detection accuracy of the electrical parameters, the size of the reference electrode 20 may be designed according to a capacity of the battery 100. In some implementations of this application, when the capacity of the battery 100 is 1000 mAh, an area of the orthographic projection of the reference electrode 20 in the thickness direction of the battery cell 10 is greater than or equal to 30% of an area of the orthographic projection of the first surface 110 or the second surface 120 on which the reference electrode 20 is located in the thickness direction of the battery cell 10. In some embodiments, the area of the orthographic projection of the reference electrode 20 in the thickness direction of the battery cell 10 may be greater than or equal to 30%, 40%, 50%, 60%, 70%, 80%, 90%, or 95% of the area of the orthographic projection of the first surface 110 or the second surface 120 on which the reference electrode 20 is located in the thickness direction of the battery cell 10.

In some other implementations of this application, when the capacity of the battery is (1000+C) mAh, the area of the orthographic projection of the reference electrode 20 in the thickness direction of the battery cell 10 is greater than or equal to X% of the area of the orthographic projection of the first surface 110 or the second surface 120 on which the reference electrode 20 is located in the thickness direction of the battery cell 10, where X%=30%+(C/1000)10%, and C is a capacity value greater than 0. In these implementations, a maximum value of X% is 100%. It may be understood that when X% is calculated as a value less than 100%, a ratio of the area of the orthographic projection of the reference electrode 20 in the thickness direction of the battery cell 10 to the area of the orthographic projection of the first surface 110 or the second surface 120 on which the reference electrode 20 is located in the thickness direction of the battery cell 10 may be any value in a range of X% to 100%. For example, when the battery capacity is 5000 mAh, the area of the orthographic projection of the reference electrode 20 in the thickness direction of the battery cell 10 is greater than or equal to 70% of the area of the orthographic projection of the first surface 110 or the second surface 120 on which the reference electrode 20 is located in the thickness direction of the battery cell 10. In actual production, the ratio of the area of the orthographic projection of the reference electrode 20 in the thickness direction of the battery cell 10 to the area of the orthographic projection of the first surface 110 or the second surface 120 on which the reference electrode 20 is located in the thickness direction of the battery cell 10 may be any value in a range of 70% to 100%, which includes, but is not limited to, 70%, 80%, or 90%. In some implementations, a value of C is in a range of 0 to 7000.

The size of the reference electrode 20 is designed to cause the area of the orthographic projection of the reference electrode 20 in the thickness direction of the battery cell 10 to be less than the area of the orthographic projection of the first surface 110 or the second surface 120 on which the reference electrode 20 is located in the thickness direction of the battery cell 10, so that installation convenience and reliability of the reference electrode and total weight design and costs of the battery are taken into account while the electrical parameters of the battery are accurately monitored. In some embodiments, the area of the orthographic projection of the reference electrode 20 in the thickness direction of the battery cell 10 is equal to the area of the orthographic projection of the first surface 110 or the second surface 120 on which the reference electrode 20 is located in the thickness direction of the battery cell 10. The size of the reference electrode 20 is designed to cause the area of the orthographic projection of the reference electrode 20 in the thickness direction of the battery cell 10 to be equal to the area of the orthographic projection of the first surface 110 or the second surface 120 on which the reference electrode 20 is located in the thickness direction of the battery cell 10, so that the reference electrode may be cut according to shapes and sizes of the first surface 110 and the second surface 120 while high monitoring accuracy is ensured, which is a simple solution.

Still referring to FIG. 1, FIG. 2, FIG. 4, FIG. 5, FIG. 6, and FIG. 7, to ensure the monitoring accuracy while reduce the size of the reference electrode to facilitate positioning and installation and optimize the weight of the battery, in some implementations of this application, the reference electrode 20 at least partially covers a middle region of the first surface 110 or the second surface 120 on which the reference electrode 20 is located, That is, at least a part of the reference electrode 20 is located in the middle region of the first surface 110 or the second surface 120 on which the reference electrode 20 is located. In some embodiments, the entirety of the reference electrode 20 is located in the middle region of the first surface 110 or the second surface 120 on which the reference electrode is located, to improve the monitoring accuracy. As shown in FIG. 4 to FIG. 7, the middle region herein may be a center line M of the first surface 110 or the second surface 120 and two side regions near the center line M, where the center line M is perpendicular to a top sealing end surface 130 or a bottom sealing end surface 140 of the battery cell 10. The top sealing end surface 130 is an end surface of the battery cell 10 corresponding to a top sealing end of the battery 100, and the bottom sealing end surface 140 is an end surface of the battery cell 10 corresponding to a bottom sealing end of the battery 100. For a battery whose battery cell 10 is a wound cell, the top sealing end surface 130 or the bottom sealing end surface 140 of the battery cell 10 is a wound end surface of the battery cell 10, that is, an end surface perpendicular to a winding direction of the wound cell. In this case, the center line M is perpendicular to the winding direction of the battery cell 10. It is defined that a direction from the top sealing end surface 130 to the bottom sealing end surface 140 of the battery cell 10 is a length direction of the battery cell 10, a direction perpendicular to the length direction is a width direction of the battery cell 10, where the center line M is along the length direction of the battery cell 10. For the battery whose battery cell 10 is a wound cell, the length direction of the battery cell 10 is perpendicular to the winding direction of the battery cell 10. The reference electrode 20 covers the middle region of the surface of the battery cell 10, so that it is convenient for lithium ions and electrons to uniformly enter the reference electrode 20, so as to obtain an accurate reference voltage; and it is also convenient for a tab of the reference electrode 20 to be arranged at an end portion of the battery and to be welded to a battery protection board.

In some implementations of this application, the reference electrode 20 at least partially covers the center line M of the first surface 110 or the second surface 120 on which the reference electrode 20 is located, and regions of the reference electrode 20 on two sides of the center line M are symmetrical about the center line M. The symmetrical design may better ensure the monitoring accuracy while reduce the size of the reference electrode to optimize the weight of the battery, so that the monitoring accuracy is ensured by designing a reference electrode 20 whose size is as small as possible.

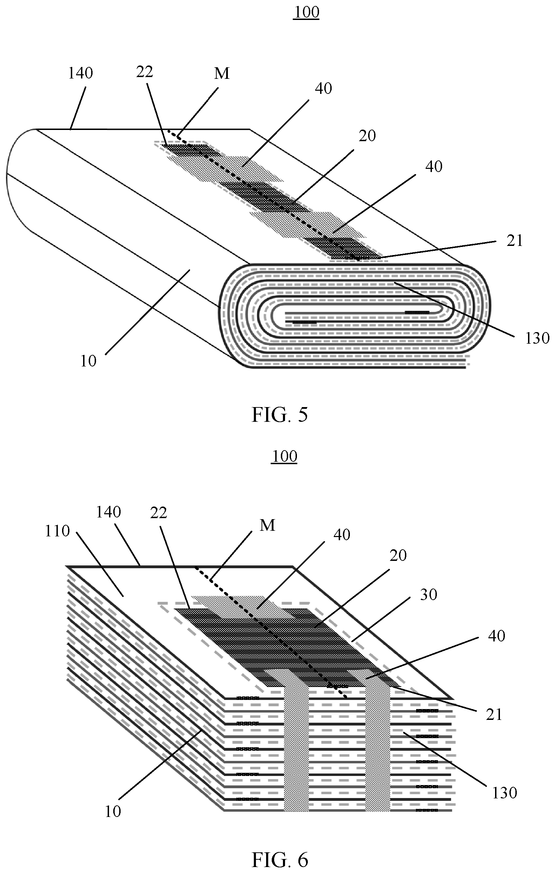

Still referring to FIG. 1, FIG. 2, FIG. 4, FIG. 5, FIG. 6, and FIG. 7, in an implementation of this application, the reference electrode 20 includes, in a direction perpendicular to the top sealing end surface 130 or the bottom sealing end surface 140 of the battery cell 10, a first end 21 and a second end 22 relatively perpendicular to the winding direction of the battery cell 10. At least one of the first end 21 and the second end 22 of the reference electrode 20 extends to be close to the top sealing end surface 130 or the bottom sealing end surface 140 of the battery cell 10. This design facilitates fixing the reference electrode 20 and the battery cell 10 by using a top sealing adhesive layer and/or a bottom sealing adhesive layer while top-sealing or bottom-sealing is performed on the battery cell 10, thereby simplifying the process. As shown in FIG. 1 and FIG. 2, the reference electrode 20 and the battery cell 10 are fixed by using a top sealing adhesive layer and a bottom sealing adhesive layer; and as shown in FIG. 4 and FIG. 6, the reference electrode 20 and the battery cell 10 are fixed by using a top sealing adhesive layer. In an implementation of this application, the first end 21 of the reference electrode 20 may extend to be close to the top sealing end surface 130 of the battery cell 10, or the second end 22 of the reference electrode 20 may extend to be close to the bottom sealing end surface 140 of the battery cell 10, or the first end 21 of the reference electrode 20 may extend to be close to the top sealing end surface 130 of the battery cell 10 and the second end 22 of the reference electrode 20 may extend to be close to the bottom sealing end surface 140 of the battery cell 10.

In an implementation of this application, the battery 100 further includes an adhesive layer 40. The adhesive layer 40 is configured to fix the reference electrode 20, the isolator 30, and the battery cell 10 together. An arrangement position of the adhesive layer 40 is not limited. As shown in FIG. 1, FIG. 2, and FIG. 4 to FIG. 7, the adhesive layer 40 may be arranged at an end portion or a middle portion of the reference electrode 20, provided that the reference electrode 20 and the battery cell 10 can be firmly fixed. In some embodiments, as shown in FIG. 1, for ease of operation, the reference electrode 20 and the battery cell 10 may be directly fixed by using the top sealing adhesive layer and the bottom sealing adhesive layer for top sealing and the bottom sealing on the battery cell, so that an operation is convenient, a use amount of adhesive can be reduced, and stable fixing can be implemented.

In an implementation of this application, a material of the isolator 30 includes any one of a polyolefin separator, a polyolefin aluminum oxide composite separator, and a polymer-based solid electrolyte, to isolate the battery cell 10 from the reference electrode 20. A size of the isolator 30 is greater than or equal to the size of the reference electrode 20. The foregoing isolator material is a conventional battery separator material, which is easy to obtain, and can effectively isolate the battery cell from the reference electrode. The polyolefin separator may be, for example, a PE (polyethylene) separator, a PP (polypropylene) separator, or a PE and PP composite separator. The polyolefin aluminum oxide composite separator may be, for example, a PE and Al₂O₃ composite separator, or a PP and Al₂O₃ composite separator. The polymer-based solid electrolyte may be, for example, a PEO (polyethylene oxide) and lithium salt composite gel electrolyte, a PVDF-HFP (polyvinylidene fluoride-hexafluoropropylene) and lithium salt composite gel electrolyte, a PAN (polyacrylonitrile) and lithium salt composite gel electrolyte, a MPEGA (polyethylene glycol methyl ether acrylate), PEGDA (polyethylene glycol diacrylate) and lithium salt composite gel electrolyte, a PEO, LATP (lithium aluminum titanium phosphate) and lithium salt composite electrolyte, and a PEO, PVDF, LLZO (lithium lanthanum zirconium oxide) and lithium salt composite electrolyte. A thickness of the isolator 30 may range from 5 µm to 20 µm. In some embodiments, the thickness of the isolator 30 may be, but is not limited to, 5 µm, 8 µm, 10 µm, 12 µm, 15 µm, 16 µm, 18 µm, or 20 µm.

The reference electrode 20 according to this application is independently arranged on the surface of the battery cell 10, and is not arranged between the positive electrode plate 101 and the negative electrode plate 102. Therefore, there is no phenomenon that when the lithium ions pass through the reference electrode 20, the lithium ions are deposited on the surface of the reference electrode 20, to affect the original capacity and balance of the battery; and a constant potential of the reference electrode can be maintained during the cycle process of the battery.

In an implementation of this application, the positive electrode plate 101 includes a positive electrode current collector and a positive electrode active layer arranged on a surface of the positive electrode current collector, and the negative electrode plate 102 includes a negative electrode current collector and a negative electrode active layer arranged on a surface of the negative electrode current collector.

The positive electrode current collector may be any one of an aluminum foil, a porous aluminum foil, and an aluminum polymer composite current collector. A thickness of the positive electrode current collector may range from 5 µm to 10 µm, for example, may be, but is not limited to, 5 µm, 6 µm, 7 µm, 8 µm, 9 µm, or 10 µm. A thickness of the positive electrode active layer may range from 5 µm to 200 µm, for example, may be, but is not limited to, 5 µm, 10 µm, 15 µm, 20 µm, 30 µm, 40 µm, 50 µm, 60 µm, 80 µm, 100 µm, 120 µm, 150 µm, 180 µm, or 200 µm. The positive electrode active layer includes a positive electrode active material, a conductive agent, and a binder. The positive electrode active material may be various materials having intercalated and de-intercalated lithium ions, and includes, but is not limited to, one or more of LiCoO₂, LiMnO₂, LiNiO₂, LiFePO₄, LiNi_{0.8}Co_{0.1}Mn_{0.1}O₂ (NCM811), LiNi_{0.5}Co_{0.2}Mn_{0.3}O₂ (NCM523), LiNi_{0.6}Co_{0.2}Mn_{0.2}O₂ (NCM622), LiNiCoMnO₂ (NCM111), and LiNi_{0.8}Co_{0.15}Al_{0.05}O₂ (NCA). Selection of the conductive agent and the binder may refer to selection of the conductive agent and the binder in the reference electrode 20, and details are not described herein again. In an implementation of this application, in the positive electrode active layer, a mass percentage of the positive electrode active material may range from 90% to 97%, for example, may be, but is not limited to, 90%, 91%, 92%, 93%, 94%, 95%, 96%, or 97%; a mass percentage of the conductive agent may range from 1% to 10%, for example, may be, but is not limited to, 1%, 2%, 3%, 4%, 5%, 6%, 7%, 8%, 9%, or 10%; and a mass percentage of the binder may range from 1% to 10%, for example, may be, but is not limited to, 1%, 2%, 3%, 4%, 5%, 6%, 7%, 8%, 9%, or 10%. In some embodiments, in the positive electrode active layer, a mass ratio of the positive electrode active material to the conductive agent to the binder may be, but is not limited to, 95:3:2 or 96:2:2.

The negative electrode current collector may be any one of a copper foil, a porous copper foil, a copper polymer composite current collector, and a carbon-coated copper foil. A thickness of the negative electrode current collector may range from 5 µm to 10 µm, for example, may be, but is not limited to, 5 µm, 6 µm, 7 µm, 8 µm, 9 µm, or 10 µm. A thickness of the negative electrode active layer may range from 5 µm to 300 µm, for example, may be, but is not limited to, 5 µm, 10 µm, 15 µm, 20 µm, 30 µm, 40 µm, 50 µm, 60 µm, 80 µm, 100 µm, 120 µm, 150 µm, 180 µm, 200 µm, 250 µm, or 300 µm. The negative electrode active layer includes a negative electrode active material, a conductive agent, and a binder. The negative electrode active material may be various materials having intercalated and de-intercalated lithium ions, and includes, but is not limited to, one or more of graphite, silicon, a silicon-carbon compound, and a silicon-oxygen compound. Selection of the conductive agent and the binder may refer to selection of the conductive agent and the binder in the reference electrode 20, and details are not described herein again. In an implementation of this application, in the negative electrode active layer, a mass percentage of the negative electrode active material may range from 90% to 96%, for example, may be, but is not limited to, 90%, 91%, 92%, 93%, 94%, 95%, or 96%; a mass percentage of the conductive agent may range from 1% to 10%, for example, may be, but is not limited to, 1%, 2%, 3%, 4%, 5%, 6%, 7%, 8%, 9%, or 10%; and a mass percentage of the binder may range from 1% to 10%, for example, may be, but is not limited to, 1%, 2%, 3%, 4%, 5%, 6%, 7%, 8%, 9%, or 10%. In some embodiments, in the negative electrode active layer, a mass ratio of the negative electrode active material to the conductive agent to the binder may be, but is not limited to, 94:2:4 or 94:3:3.

In an implementation of this application, the separator forming the battery cell 10 may be any one of a polyolefin separator and a polyolefin aluminum oxide composite separator. The polyolefin separator and the polyolefin aluminum oxide composite separator are specifically described above. The separator forming the battery cell 10 may be made of a same material as the isolator 30, or may be made of a different material from the isolator 30.

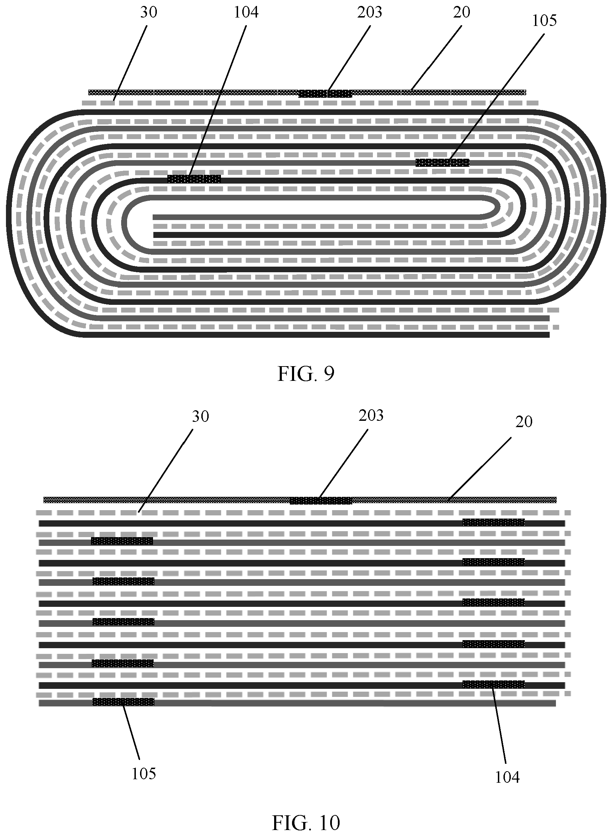

Referring to FIG. 8, FIG. 9, and FIG. 10, FIG. 8 is a schematic structural diagram of a battery 100 according to an embodiment of this application; FIG. 9 is a schematic diagram of arrangement of a tab at an end portion of a wound cell according to an embodiment of this application; and FIG. 10 is a schematic diagram of arrangement of a tab at an end portion of a laminated battery cell according to an embodiment of this application. One end of the battery cell 10 on which the tab is arranged may be a top sealing end of the battery 100. That is, the tab may be located at one end at which the top sealing end surface of the battery cell 10 is located. In an implementation of this application, the positive electrode plate 101 further includes a positive electrode tab 104 electrically connected to the positive electrode current collector, the negative electrode plate 102 further includes a negative electrode tab 105 electrically connected to the negative electrode current collector, and the reference electrode 20 further includes a reference electrode tab 203 electrically connected to the third current collector 201.

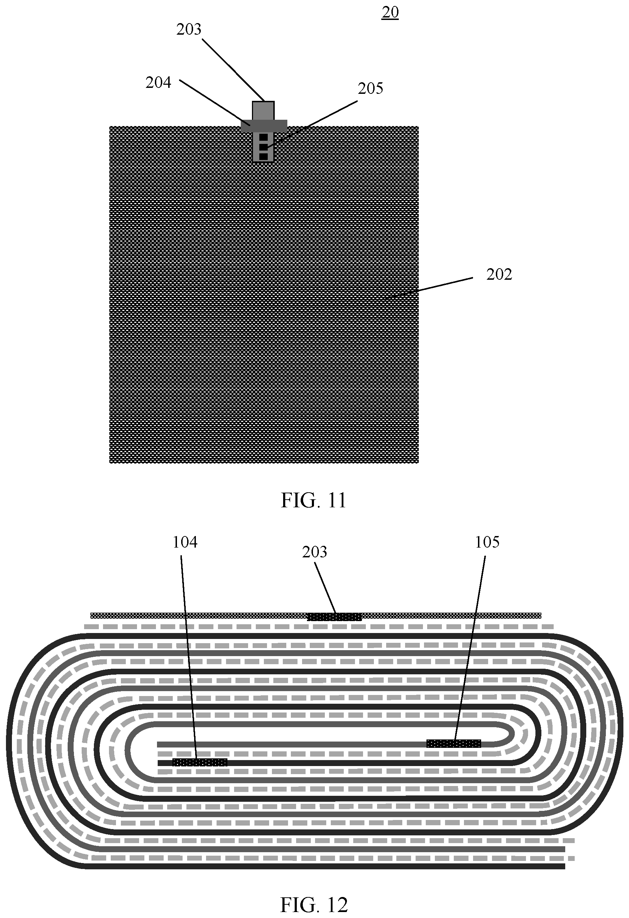

As shown in FIG. 3A and FIG. 11, FIG. 11 is a schematic structural diagram (a top view) of a reference electrode 20 according to an embodiment of this application. The reference electrode tab 203 may be formed through welding on a surface of the third current collector 201 that is not covered by the electrode material layer 202, where 205 is a welding joint, 204 is a tab adhesive, and the tab adhesive is configured for protecting the battery cell to prevent a short circuit. The reference electrode tab 203 is arranged at an edge position of the reference electrode 20, and a specific position of the edge may be designed according to an actual requirement. Similarly, the positive electrode tab 104 may be formed through welding on a surface of the positive electrode current collector that is not covered by the positive electrode active layer. The negative electrode tab 105 may be formed through welding on a surface of the negative electrode current collector that is not covered by the negative electrode active layer.

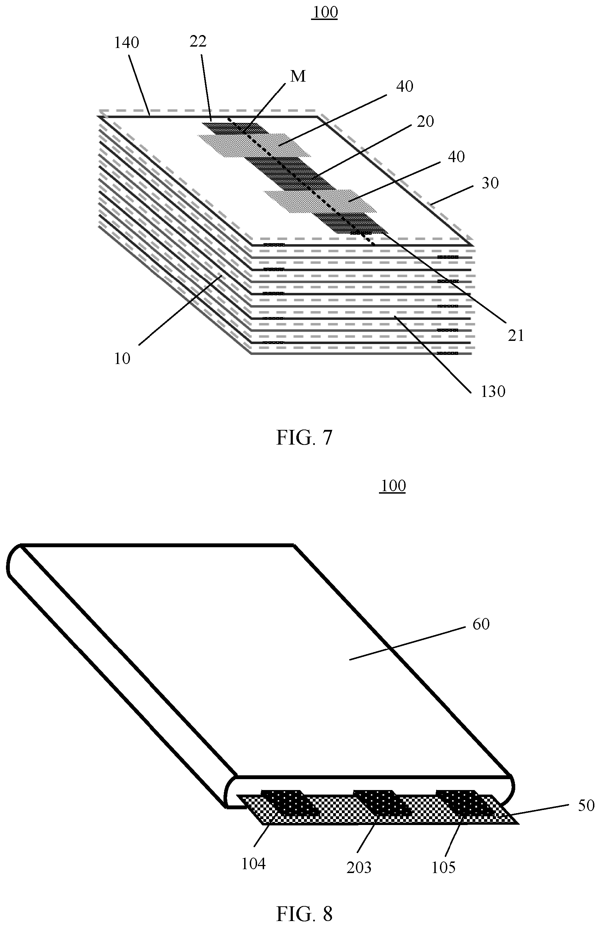

Still referring to FIG. 8 and FIG. 9, for ease of preparation and connection of the battery to an external circuit, in an implementation of this application, the positive electrode tab 104 and the negative electrode tab 105 are arranged at an end portion of the battery cell 10, and may be specifically arranged at a top sealing end portion or a bottom sealing end portion of the battery cell 10. The top sealing end portion is an end portion at which the top sealing end surface 130 is located, and the bottom sealing end portion is an end portion at which the bottom sealing end surface 140 is located. The reference electrode tab 203 is arranged at an end portion of the reference electrode 20. For a battery whose battery cell 10 is a wound cell, the positive electrode tab 104 and the negative electrode tab 105 are arranged at an end portion of the battery cell 10 that is perpendicular to a winding direction, and the reference electrode tab 203 is arranged at the end portion of the reference electrode 20 that is perpendicular to the winding direction of the battery cell 10. The positive electrode tab 104 and the negative electrode tab 105 may be arranged at the end portion at which the top sealing end surface 130 of the battery cell 10 is located, or may be arranged at the end portion at which the bottom sealing end surface 140 is located. The reference electrode tab 203 may be arranged at the first end 21 of the battery cell 10, or may be arranged at the second end 22. In actual preparation, the reference electrode tab 203 may be arranged at a same end portion of the battery 100 as the positive electrode tab 104 and the negative electrode tab 105. Alternatively, the reference electrode tab 203 may be arranged at one end portion of the battery 100, and the positive electrode tab 104 and the negative electrode tab 105 may be arranged at another end portion of the battery 100. In some implementations, the reference electrode tab 203, the positive electrode tab 104, and the negative electrode tab 105 are arranged at a same end portion (a top sealing end 601 or a bottom sealing end 602) of the battery 100. A direction from the top sealing end 601 to the bottom sealing end 602 of the battery 100 is defined as a length direction of the battery 100 (that is, the length direction of the battery cell 10), and a direction perpendicular to the length direction is a width direction of the battery 100 (that is, the width direction of the battery cell 10). The reference electrode tab 203, the positive electrode tab 104, and the negative electrode tab 105 of the battery cell 10 are arranged at intervals along the width direction of the battery cell 10.

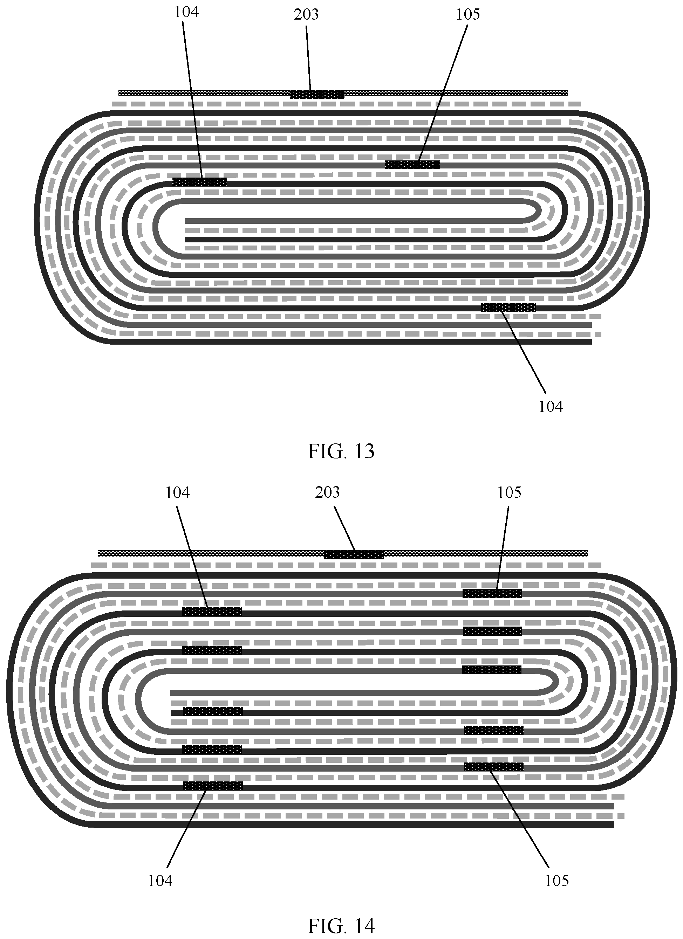

The battery cell 10 has a laminated structure of a plurality of layers of positive electrode plates 101, separators 103, and negative electrode plates 102 in the thickness direction. The positive electrode tab 104 may be arranged on the positive electrode current collector of any layer of the positive electrode plate 101 in the thickness direction of the battery cell 10. Similarly, the negative electrode tab 105 may be arranged on the negative electrode current collector of any layer of the negative electrode plate 102 in the thickness direction of the battery cell 10. Referring to FIG. 9, FIG. 10, FIG. 12, FIG. 13, and FIG. 14, FIG. 12, FIG. 13, and FIG. 14 are schematic diagrams of arrangement of a tab at an end portion of a wound cell. The reference electrode tab 203 may be arranged at any position of the reference electrode 20 along the width direction of the battery cell 10. In some implementations, the reference electrode tab 203 may be arranged at a middle portion of the reference electrode 20 along the width direction of the battery cell 10, to facilitate preparation and subsequent welding to a battery protection board. In some implementations, in a battery whose battery cell is a wound cell, the positive electrode tab 104 and the negative electrode tab 105 may be arranged at a winding start end of the positive electrode plate 101 and the negative electrode plate 102 that are in an innermost ring of the battery cell 10, or may be arranged at a winding middle portion of the positive electrode plate 101 and the negative electrode plate 102 that are in a middle ring of the battery cell 10, or may be arranged at a winding tail end of the positive electrode plate 101 and the negative electrode plate 102 that are in an outermost ring of the battery cell 10. One or a plurality of positive electrode tabs 104 and negative electrode tabs 105 may be arranged. As shown in FIG. 9, the positive electrode tab 104 and the negative electrode tab 105 are arranged at the middle portion of the positive electrode plate 101 and the negative electrode plate 102 that are in the middle ring of the battery cell 10. As shown in FIG. 12, the positive electrode tab 104 and the negative electrode tab 105 are arranged at the winding start end of the positive electrode plate 101 and the negative electrode plate 102 that are in the innermost ring of the battery cell 10. As shown in FIG. 9 and FIG. 12, a quantity of the positive electrode tabs 104 and a quantity of the negative electrode tabs 105 are both one. The single-tab design is beneficial to ensuring a rated capacity of the battery, reducing encapsulation difficulty, to avoid potential hazards such as a short circuit, bulging, and liquid leakage of the battery caused by poor encapsulation. As shown in FIG. 13, a quantity of the positive electrode tabs 104 is two, and the two positive electrode tabs 104 are spaced apart along the width direction of the battery cell 10. As shown in FIG. 14, a quantity of the positive electrode tabs 104 and a quantity of the negative electrode tabs 105 are both five, where the five positive electrode tabs 104 are arranged in an aligned manner along the thickness direction of the battery cell 10, and the five negative electrode tabs 105 are arranged in an aligned manner along the thickness direction of the battery cell 10. The multi-tab design is beneficial to improving rate performance of the battery and reducing a temperature rise during charging and discharging, to be better suitable for a high-power device.

In an implementation of this application, a material of the positive electrode tab 104 may be an aluminum strip, a width of the positive electrode tab 104 may range from 6 mm to 7 mm, and a thickness ranges from 0.08 mm to 0.1 mm. Specifically, for example, the width is 6 mm and the thickness is 0.08 mm, the width is 7 mm and the thickness is 0.08 mm, or the width is 7 mm and the thickness is 0.1 mm. A material of the negative electrode tab 105 may be a copper strip or a copper nickel-plated strip. A width of the negative electrode tab 105 may range from 6 mm to 7 mm, and a thickness ranges from 0.08 mm to 0.1 mm. Specifically, for example, the width is 6 mm and the thickness is 0.08 mm, the width is 7 mm and the thickness is 0.08 mm, or the width is 7 mm and the thickness is 0.1 mm. A material of the reference electrode tab 203 may be a copper strip or a copper nickel-plated strip. A width of the reference electrode tab 203 may range from 6 mm to 8 mm, and a thickness ranges from 0.05 mm to 0.1 mm. Specifically, for example, the width is 6 mm and the thickness is 0.08 mm, the width is 7 mm and the thickness is 0.1 mm, or the width is 8 mm and the thickness is 0.1 mm.

Still referring to FIG. 8, in an implementation of this application, the battery 100 further includes a battery protection board 50. The positive electrode tab 104, the negative electrode tab 105, and the reference electrode tab 203 are respectively connected to the battery protection board 50 through welding. The battery protection board 50 is connected to the positive electrode tab 104, the negative electrode tab 105, and the reference electrode tab 203 through welding, to be fixedly connected to the battery cell 10. For better welding, the positive electrode tab 104, the negative electrode tab 105, and the reference electrode tab 203 may be bent and flattened until the three components are basically flush, to be welded to the battery protection board 50. The battery protection board 50 is an integrated circuit board configured to protect the battery 100. The battery protection board 50 may include components such as a PCB circuit board, an anti-counterfeiting IC chip (Integrated Circuit Chip), an electricity meter IC chip, a protection IC chip, a capacitor, a resistor, a NTC (Negative temperature coefficient, negative temperature coefficient) thermistor, a PTC (Positive Temperature Coefficient, positive temperature coefficient) thermistor, a MOSFET (Metal-Oxide-Semiconductor Field-Effect Transistor, metal-oxide-semiconductor field-effect transistor), a FUSE (that is, a fuse, or a fuse wire), or the like. The battery protection board 50 is configured to monitor and protect safety of the battery, and avoid cases such as overcharging, overdischarging, overcurrent, overvoltage, undervoltage, and overtemperature of the battery cell, so that the battery 100 may be maintained in a safe working state.

In an implementation of this application, a positive electrode contact point, a negative electrode contact point, and a reference electrode contact point are arranged on the battery protection board 50, and the positive electrode tab 104, the negative electrode tab 105 and the reference electrode tab 203 are respectively connected to the positive electrode contact point, the negative electrode contact point, and the reference electrode contact point through welding. The battery protection board 50 may be connected to a main board of a power consuming device by using a FPC (Flexible Printed Circuit, flexible printed circuit) connector, a BTB (Board-to-Board, board-to-board) connector, or the like.

In an implementation of this application, the battery protection board 50 is connected to the positive electrode tab 104 and the reference electrode tab 203 to form a test loop, and/or the battery protection board 50 is connected to the negative electrode tab 105 and the reference electrode tab 203 to form a test loop, to obtain the electrical parameter of the battery 100. In some implementations, the battery protection board 50 is connected to the positive electrode tab 104 and the reference electrode tab 203 to form a test loop, so that a positive electrode absolute potential and positive electrode impedance of the battery 100 may be monitored and obtained in real time. In some implementations, the battery protection board 50 is connected to the negative electrode tab 105 and the reference electrode tab 203 to form a test loop, so that a negative electrode absolute potential and negative electrode impedance of the battery 100 may be monitored and obtained in real time. In some implementations, the battery protection board 50 is connected to the positive electrode tab 104 and the reference electrode tab 203 to form a test loop, and the battery protection board 50 is connected to the negative electrode tab 105 and the reference electrode tab 203 to form a test loop, so that the positive electrode absolute potential, the negative electrode absolute potential, the positive electrode impedance, and the negative electrode impedance of the battery 100 may be monitored and obtained in real time.

In some implementations, the battery protection board 50 is further connected to the positive electrode tab 104 and the negative electrode tab 105 to form a test loop, to obtain the electrical parameters of the battery 100, for example, monitor and obtain the electrical parameters such as a voltage and impedance of the entirety of the battery 100.

In an implementation of this application, the battery protection board 50 is further configured to adjust a charging and discharging status of the battery 100 according to the monitored electrical parameters of the battery 100. The foregoing electrical parameters can well reflect internal status information of the battery 100, and the charging and discharging status of the battery is adjusted in time according to these electrical parameters, so that a service life and safety performance of the battery may be improved, and occurrence of a safety accident caused by abnormal charging and discharging of a lithium-ion battery is avoided. Specifically, for example, in a charging process of the battery 100, when it is detected that the current negative electrode absolute potential of the battery is greater than a preset potential, a charging current of the battery may be reduced, so that the battery returns to a safe charging state.

Still referring to FIG. 8, in an implementation of this application, the battery 100 further includes a housing 60, and the battery cell 10, the reference electrode 20, and the isolator 30 are all accommodated in the housing 60. In some implementations, the battery 100 is a soft packet battery, and a material of the housing 60 may be various soft packet housing materials, including but not limited to an aluminum plastic film. The positive electrode tab 104, the negative electrode tab 105, and the reference electrode tab 203 are exposed from the housing 60, to be electrically connected to an external circuit. The battery protection board 50 is located outside the housing 60.

In an implementation of this application, the battery 100 further includes an electrolyte solution, and the electrolyte solution is accommodated in the housing 60. In an implementation of this application, the electrolyte solution includes an organic solvent and an electrolyte lithium salt, and some additives may further be added as required. The organic solvent may be a carbonate organic solution, for example, ethylene carbonate (EC), diethyl carbonate (DEC), dimethyl carbonate (DMC), or ethyl methyl carbonate (EMC). For example, the electrolyte lithium salt may be lithium hexafluorophosphate.

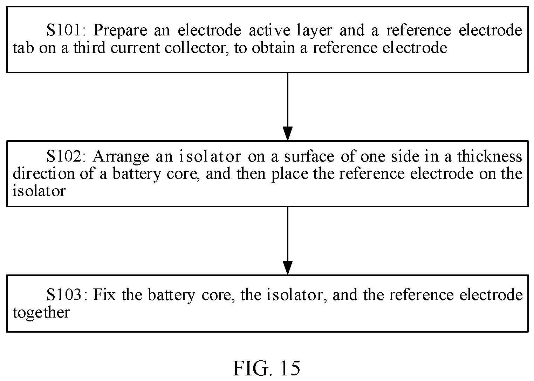

Referring to FIG. 15, an embodiment of this application further provides a preparation method for the foregoing battery having a reference electrode. The method includes the following steps.

S101: Prepare an electrode active layer and a reference electrode tab on a third current collector, to obtain the reference electrode.

In some implementations, preparation of the reference electrode may specifically include: mixing a reference electrode active material, a conductive agent, and a binder based on a specific ratio, adding a solvent, and stirring to prepare a slurry; coating the third current collector with the prepared slurry by using a single-layer extrusion coating method, then drying the third current collector in a vacuum oven at a temperature of 80°C to 120°C, and finally cutting the third current collector into a required shape and a required size; and removing a part of the reference electrode active material on the third current collector, and welding a reference electrode tab at the part, to obtain the reference electrode. The solvent may be N-methyl pyrrolidone (NMP).

S102: Arrange an isolator on a surface of one side in a thickness direction of a battery cell, and then place the reference electrode on the isolator.

In some implementations, preparation of the battery cell may specifically include:
(1) Preparation of a positive electrode plate: A positive electrode active material, a conductive agent, and a binder are mixed based on a specific ratio, a solvent is added, and the solvent is added and the positive electrode active material, the conductive agent, and the binder are stirred to prepare a slurry; and a positive electrode current collector is coated with the prepared slurry by using a double-layer extrusion coating method, then the positive electrode current collector is dried in a vacuum oven at a temperature of 80°C to 120°C, and the positive electrode current collector is finally cut into a required shape and a positive electrode tab is welded, where the solvent may be N-methyl pyrrolidone (NMP);
(2) Preparation of a negative electrode plate: A negative electrode active material, a conductive agent, and a binder are mixed based on a specific ratio, a solvent is added, and the negative electrode active material, the conductive agent, and the binder are stirred to prepare a slurry; and a negative electrode current collector is coated with the prepared slurry by using a double-layer extrusion coating method, then the negative electrode current collector is dried in a vacuum oven at a temperature of 80°C to 120°C, and the negative electrode current collector is finally cut into a required shape and a negative electrode tab is welded, where the solvent may be deionized water or ultrapure water.
(3) The battery cell is prepared by winding or laminating the prepared positive electrode plate, the prepared negative electrode plate, and a separator.

S103: Fix the battery cell, the isolator, and the reference electrode together.

In some implementations, the battery cell, the isolator, and the reference electrode are fixed together by using an adhesive tape. In some embodiments, the battery cell, the isolator, and the reference electrode may be fixed together by using an adhesive tape when top sealing and bottom sealing are performed on the top and the bottom of the battery cell.

In some implementations of this application, the foregoing preparation method further includes the following step.

S104 (not shown in the figure): Package the battery cell, the isolator, and the reference electrode that are fixed together by using a housing material, inject an electrolyte solution to obtain a packaged battery cell, and weld the packaged battery cell to a battery protection board, to obtain a battery.

It may be understood that, in the foregoing preparation method, selection of components of the battery cell, the isolator, the reference electrode, the housing material, the electrolyte solution, and the like is as described above, and details are not described herein again.

In a specific embodiment of this application, a preparation method for the battery includes the following steps.
(1) Preparation of a positive electrode plate: LiCoO₂, Ketjen black, and a PVDF binder are added to NMP based on a mass ratio of 96:2:2, and are stirred to prepare a slurry. Then an aluminum foil with a thickness of 7 µm is coated with the slurry by using the double-layer extrusion coating method, the aluminum foil is then dried in a vacuum oven at 100°C, and the aluminum foil is finally cut into a required shape and a positive electrode tab (material: an aluminum strip; and size: a width is 6 mm/a thickness is 0.08 mm) is welded.
(2) Preparation of a negative electrode plate: A silicon-carbon (SiC) composite material, Ketjen black, and polyacrylic acid (PAA) are added to deionized water based on a mass ratio of 93:2:5, and are stirred to prepare a slurry. A copper foil with a thickness of 5 µm is coated with the slurry by using the double-layer extrusion coating method, the copper foil is then dried in a vacuum oven at 80°C, and the copper foil is finally cut into a required shape and a negative electrode tab (material: a copper nickel-plated strip; and size: a width is 6 mm/a thickness is 0.08 mm) is welded.
(3) Preparation of a wound cell: The prepared positive electrode plate, the prepared negative electrode plate, and a separator are prepared into a wound cell having a capacity of 8000 mAh through winding by using a winding machine.
(4) Preparation of a reference electrode: Nano-scale lithium iron phosphate (LiFePO₄), Ketjen black, and polyacrylic acid (PAA) are added to deionized water based on a mass ratio of 90:5:5, and are stirred to prepare a slurry. A copper foil with a thickness of 5 µm is coated with the slurry by using the single-layer extrusion coating method, where a coating thickness of the slurry ranges from 1 µm to 5 µm, the copper foil is then dried in a vacuum oven (at 80°C), and the copper foil is finally cut into a shape having a same size as an upper surface of the wound cell in a thickness direction. A part of an electrode slurry layer on the copper foil is removed by using a scraper, and a reference electrode tab (material: a copper nickel-plated strip; and size: a width is 6 mm/a thickness is 0.08 mm) is welded.
(5) Preparation of the battery: The reference electrode is placed on the upper surface of the wound cell, the isolator is placed between the wound cell and the reference electrode, and then, top sealing and bottom sealing are performed on the top and the bottom of the wound cell by using an adhesive tape, to fix the wound cell, the isolator, and the reference electrode together. The wound cell on which the reference electrode is fixed is packaged by using an aluminum plastic film, an electrolyte solution is injected to obtain a packaged battery cell, and the packaged battery cell is welded to a battery protection board to obtain a cell battery.

In another specific embodiment of this application, a preparation method for the battery includes the following steps.
(1) Preparation of a positive electrode plate: NCM811, Ketjen black, and a PVDF binder are added to NMP based on a mass ratio of 96:2:2, and are stirred to prepare a slurry. An aluminum foil with a thickness of 7 µm is coated with the slurry by using the double-layer extrusion coating method, the aluminum foil is then dried in a vacuum oven at 100°C, and the aluminum foil is finally cut into a required shape and a positive electrode tab (material: an aluminum strip; and size: a width is 6 mm/a thickness is 0.08 mm) is welded.
(2) Preparation of a negative electrode plate: Graphite (Gr), Ketjen black, and polyacrylic acid (PAA) are added to deionized water based on a mass ratio of 95:2:3, and are stirred to prepare a slurry. A copper foil with a thickness of 5 µm is coated with the slurry by using the double-layer extrusion coating method, the copper foil is then dried in a vacuum oven at 80°C, and the copper foil is finally cut into a required shape and a negative electrode tab (material: a copper nickel-plated strip; and size: a width is 6 mm/a thickness is 0.08 mm) is welded.
(3) Preparation of a wound cell: The prepared positive electrode plate, the prepared negative electrode plate, and a separator are prepared into a wound cell having a capacity of 5000 mAh through winding by using a winding machine.
(4) Preparation of a reference electrode: Nano-scale lithium iron phosphate (LiFePO₄), Ketjen black, and polyacrylic acid (PAA) are added to deionized water based on a mass ratio of 90:5:5, and are stirred to prepare a slurry. A copper foil with a thickness of 5 µm is coated with the slurry by using the single-layer extrusion coating method, where a coating thickness of the slurry ranges from 1 µm to 5 µm, the copper foil is then dried in a vacuum oven (at 80°C), and the copper foil is finally cut into a reference electrode having an area size that is 70% of an area of an upper surface of the wound cell in a thickness direction. A part of an electrode slurry layer on the copper foil is removed by using a scraper, and a reference electrode tab (material: a copper nickel-plated strip; and size: a width is 2 mm/a thickness is 0.05 mm) is welded.
(5) Preparation of the battery: The reference electrode is placed on the upper surface of the wound cell, where the entirety of the reference electrode is located in a middle region of the upper surface of the wound cell, and regions on two sides of a center line M perpendicular to a winding direction of the wound cell on the upper surface of the reference electrode are symmetrical about the center line M. The isolator is placed between the wound cell and the reference electrode, and then, top sealing and bottom sealing are performed on the top and the bottom of the wound cell by using an adhesive tape, to fix the wound cell, the isolator, and the reference electrode together. The wound cell on which the reference electrode is fixed is packaged by using an aluminum plastic film, an electrolyte solution is injected to obtain a packaged battery cell, and the packaged battery cell is welded to a battery protection board to obtain a cell battery.

In another specific embodiment of this application, a preparation method for the battery includes the following steps.
(1) Preparation of a positive electrode plate: LiFePO₄, Ketjen black, and a PVDF binder are added to NMP based on a mass ratio of 95:3:2, and are stirred to prepare a slurry. An aluminum foil with a thickness of 7 µm is coated with the slurry by using the double-layer extrusion coating method, the aluminum foil is then dried in a vacuum oven at 100°C, and the aluminum foil is finally cut into a required shape and a positive electrode tab (material: an aluminum strip; and size: a width is 6 mm/a thickness is 0.08 mm) is welded.
(2) Preparation of a negative electrode plate: Graphite (Gr), Ketjen black, and a CMC+SBR binder are added to deionized water based on a mass ratio of 95:2:3, and are stirred to prepare a slurry. A copper foil with a thickness of 5 µm is coated with the slurry by using the double-layer extrusion coating method, the copper foil is then dried in a vacuum oven at 80°C, and the copper foil is finally cut into a required shape and a negative electrode tab (material: a copper nickel-plated strip; and size: a width is 6 mm/a thickness is 0.08 mm) is welded.
(3) Preparation of a wound cell: The prepared positive electrode plate, the prepared negative electrode plate, and a separator are prepared into a wound cell having a capacity of 2000 mAh through winding by using a winding machine.
(4) Preparation of a reference electrode: Nano-scale lithium titanate (Li₄Ti₅O₁₂), Ketjen black, and polyacrylic acid (PAA) are added to deionized water based on a mass ratio of 90:5:5, and are stirred to prepare a slurry. A copper foil with a thickness of 5 µm is coated with the slurry by using the single-layer extrusion coating method, where a coating thickness of the slurry ranges from 1 µm to 5 µm, the copper foil is then dried in a vacuum oven (at 100°C), and the copper foil is finally cut into a reference electrode having an area size that is 40% of an area of an upper surface of the wound cell in a thickness direction. A part of an electrode slurry layer on the copper foil is removed by using a scraper, and a reference electrode tab (material: a copper nickel-plated strip; and size: a width is 2 mm/a thickness is 0.05 mm) is welded.
(5) Preparation of the battery: The reference electrode is placed on the upper surface of the wound cell, where the entirety of the reference electrode is located in a middle region of the upper surface of the wound cell, and regions on two sides of a center line M perpendicular to a winding direction of the wound cell on the upper surface of the reference electrode are symmetrical about the center line M. The isolator is placed between the wound cell and the reference electrode, and then, top sealing and bottom sealing are performed on the top and the bottom of the wound cell by using an adhesive tape, to fix the wound cell, the isolator, and the reference electrode together. The wound cell on which the reference electrode is fixed is packaged by using an aluminum plastic film, an electrolyte solution is injected to obtain a packaged battery cell, and the packaged battery cell is welded to a battery protection board to obtain a cell battery.

In another specific embodiment of this application, a preparation method for the battery includes the following steps.
(1) Preparation of a positive electrode plate: LiFePO₄, Ketjen black, and a PVDF binder are added to NMP based on a mass ratio of 95:3:2, and are stirred to prepare a slurry. An aluminum foil with a thickness of 7 µm is coated with the slurry by using the double-layer extrusion coating method, the aluminum foil is then dried in a vacuum oven at 100°C, and the aluminum foil is finally cut into a required shape and a positive electrode tab (material: an aluminum strip; and size: a width is 6 mm/a thickness is 0.08 mm) is welded.
(2) Preparation of a negative electrode plate: Graphite (Gr), Ketjen black, and a CMC+SBR binder are added to deionized water based on a mass ratio of 95:2:3, and are stirred to prepare a slurry. A copper foil with a thickness of 5 µm is coated with the slurry by using the double-layer extrusion coating method, the copper foil is then dried in a vacuum oven at 80°C, and the copper foil is finally cut into a required shape and a negative electrode tab (material: a copper nickel-plated strip; and size: a width is 6 mm/a thickness is 0.08 mm) is welded.
(3) Preparation of a laminated battery cell: The prepared positive electrode plate, the prepared negative electrode plate, and a separator are prepared into a laminated battery cell having a capacity of 5000 mAh by using a lamination machine.
(4) Preparation of a reference electrode: Nano-scale lithium titanate (Li₄Ti₅O₁₂), Ketjen black, and polyacrylic acid (PAA) are added to deionized water based on a mass ratio of 90:5:5, and are stirred to prepare a slurry. A copper foil with a thickness of 5 µm is coated with the slurry by using the single-layer extrusion coating method, where a coating thickness of the slurry ranges from 1 µm to 5 µm, the copper foil is then dried in a vacuum oven (at 100°C), and the copper foil is finally cut into a reference electrode having an area size that is 70% of an area of an upper surface of the laminated battery cell in a thickness direction. A part of an electrode slurry layer on the copper foil is removed by using a scraper, and a reference electrode tab (material: a copper nickel-plated strip; and size: a width is 2 mm/a thickness is 0.05 mm) is welded.
(5) Preparation of the battery: The reference electrode is placed on the upper surface of the wound cell, where the entirety of the reference electrode is located in a middle region of the upper surface of the wound cell, and regions on two sides of a center line M perpendicular to a winding direction of the wound cell on the upper surface of the reference electrode are symmetrical about the center line M. The isolator is placed between the wound cell and the reference electrode, and then, top sealing and bottom sealing are performed on the top and the bottom of the wound cell by using an adhesive tape, to fix the wound cell, the isolator, and the reference electrode together. The wound cell on which the reference electrode is fixed is packaged by using an aluminum plastic film, an electrolyte solution is injected to obtain a packaged battery cell, and the packaged battery cell is welded to a battery protection board to obtain a cell battery.

The preparation method of the battery provided in the embodiments of this application has a simple process, and has a high matching degree with a commercial production process and production equipment of an existing battery. Therefore, there is no need to change an existing wound cell preparing process, and there is no need to add a complex operation procedure and production equipment, which is beneficial to implementing large-scale production based on an existing production line.

An embodiment of this application further provides a power consuming device, where the power consuming device includes a power consuming module and the battery described in the foregoing embodiments of this application, and the battery is configured to supply power to the power consuming module. The power consuming device may be various electronic devices, vehicles, energy storage devices, and the like. For example, the electronic device may be various electronic products of a consumption type, which include but are not limited to a mobile phone, a tablet computer, a notebook computer, a wearable device (for example, glasses, a bracelet, a watch, or the like), and a vehicle-mounted device.

The foregoing descriptions are merely specific implementations of the present invention, but are not intended to limit the protection scope of the present invention. Any variation or replacement readily figured out by a person skilled in the art within the technical scope disclosed in the present invention shall fall within the protection scope of the present invention Therefore, the protection scope of the present invention shall be subject to the protection scope of the claims.

It should be understood that the "first", "second", and various numbers in this specification are used for differentiation only for ease of description, instead of limiting the scope of this application.

In this application, "and/or" describes an association relationship for describing associated objects and represents that three relationships may exist. For example, A and/or B may represent the following cases: Only A exists, both A and B exist, and only B exists, where A and B may be singular or plural. The character "/" generally indicates an "or" relationship between the associated objects.

In this application, "at least one" means one or more and "a plurality of" means two or more. "At least one of the following items (pieces)" or a similar expression refers to any combination of these items, including a single item (piece) or any combination of a plurality of items (pieces). For example, "at least one (piece) of a, b, or c", or "at least one (piece) of a, b, and c" may represent a, b, c, a-b (that is, a and b), a-c, b-c, or a-b-c, where a, b, and c may be singular or plural respectively.

In this application, "-" indicates a range value, including endpoint values of two ends. For example, a may be 0.5-15, indicating that a may range from 0.5 to 15, including the endpoint values 0.5 and 15.

It should be understood that in various embodiments of this application, sequence numbers of the foregoing processes do not mean an execution sequence. Some or all steps may be executed in parallel or sequentially. The execution sequence of the processes should be determined based on functions and internal logic of the processes, and should not be construed as any limitation on the implementation processes of the embodiments of this application.

## Claims

1. A battery, comprising:
a battery cell, wherein the battery cell is a wound cell, and comprises a positive electrode plate, a negative electrode plate, and a separator that are arranged in a laminating and winding manner, wherein the separator is arranged between the positive electrode plate and the negative electrode plate; and the battery cell comprises a first surface and a second surface oppositely arranged along a thickness direction of the battery cell;
a reference electrode, wherein the reference electrode comprises a third current collector and an electrode material layer arranged on a surface of one side of the third current collector; the reference electrode is arranged on the first surface or the second surface of the battery cell; and the reference electrode is configured to form a test loop with the positive electrode plate and/or the negative electrode plate to test an electrical parameter of the battery; and
an isolator, arranged between the battery cell and the reference electrode to isolate the battery cell from the reference electrode, wherein one side of the electrode material layer of the reference electrode is close to the isolator.

2. The battery according to claim 1, wherein the electrode material layer comprises a reference electrode active material, a conductive agent, and a binder, and the reference electrode active material comprises LiFePO₄ and/or Li₄Ti₅O₁₂.

3. The battery according to claim 2, wherein D50 particle sizes of LiFePO₄ and Li₄Ti₅O₁₂ range from 1 nm to 100 nm.

4. A battery, comprising:
a battery cell, wherein the battery cell is a laminated battery cell, and comprises a positive electrode plate, a negative electrode plate, and a separator that are arranged in a laminating manner, wherein the separator is arranged between the positive electrode plate and the negative electrode plate; and the battery cell comprises a first surface and a second surface oppositely arranged along a thickness direction of the battery cell;
a reference electrode, wherein the reference electrode comprises a third current collector and an electrode material layer arranged on a surface of one side of the third current collector; the reference electrode is arranged on the first surface or the second surface of the battery cell; and the reference electrode is configured to form a test loop with the positive electrode plate and/or the negative electrode plate to test an electrical parameter of the battery; and
an isolator, arranged between the battery cell and the reference electrode to isolate the battery cell from the reference electrode, wherein one side of the electrode material layer of the reference electrode is close to the isolator, wherein
the electrode material layer comprises a reference electrode active material, a conductive agent, and a binder, and the reference electrode active material comprises Li₄Ti₅O₁₂.

5. The battery according to claim 4, wherein a D50 particle size of Li₄Ti₅O₁₂ ranges from 1 nm to 100 nm.

6. The battery according to any one of claims 1 to 5, wherein a thickness of the electrode material layer ranges from 1 µm to 5 µm.

7. The battery according to any one of claims 1 to 6, wherein the third current collector comprises any one of a copper foil, a carbon-coated copper foil, a copper mesh, a nickel mesh, and carbon cloth.

8. The battery according to any one of claims 1 to 7, wherein a material of the isolator comprises any one of a polyolefin separator, a polyolefin aluminum oxide composite separator, and a polymer-based solid electrolyte.

9. The battery according to any one of claims 1 to 8, wherein an orthographic projection of the reference electrode in the thickness direction of the battery cell is located within an orthographic projection of the first surface or the second surface on which the reference electrode is located in the thickness direction of the battery cell.

10. The battery according to claim 9, wherein when a battery capacity is 1000 mAh, an area of the orthographic projection of the reference electrode in the thickness direction of the battery cell is greater than or equal to 30% of an area of the orthographic projection of the first surface or the second surface on which the reference electrode is located in the thickness direction of the battery cell; and when the battery capacity is (1000+C) mAh, the area of the orthographic projection of the reference electrode in the thickness direction of the battery cell is greater than or equal to X% of the area of the orthographic projection of the first surface or the second surface on which the reference electrode is located in the thickness direction of the battery cell, wherein C is greater than 0, and X%=30%+(C/1000)10%.

11. The battery according to any one of claims 1 to 10, wherein the reference electrode at least partially covers a middle region of the first surface or the second surface on which the reference electrode is located.

12. The battery according to any one of claims 1 to 11, wherein the reference electrode at least partially covers a center line of the first surface or the second surface on which the reference electrode is located, and regions of the reference electrode on two sides of the center line are symmetrical about the center line, wherein the center line is perpendicular to a bottom sealing end surface or a top sealing end surface of the battery cell.

13. The battery according to any one of claims 1 to 12, wherein the reference electrode comprises a first end portion and a second end portion oppositely arranged in a direction perpendicular to the bottom sealing end surface or the top sealing end surface of the battery cell, wherein at least one of the first end portion and the second end portion extends to be close to the bottom sealing end surface or the top sealing end surface of the battery cell.

14. The battery according to any one of claims 1 to 13, wherein the positive electrode plate comprises a positive electrode current collector and a positive electrode active layer arranged on a surface of the positive electrode current collector, and the negative electrode plate comprises a negative electrode current collector and a negative electrode active layer arranged on a surface of the negative electrode current collector; and the positive electrode plate further comprises a positive electrode tab electrically connected to the positive electrode current collector, the negative electrode plate further comprises a negative electrode tab electrically connected to the negative electrode current collector, and the reference electrode further comprises a reference electrode tab electrically connected to the third current collector.

15. The battery according to claim 14, wherein the positive electrode tab and the negative electrode tab are arranged at end portions of the battery cell, and the reference electrode tab is arranged at an end portion of the reference electrode.

16. The battery according to claim 14 or 15, wherein the battery further comprises a battery protection board, and the positive electrode tab, the negative electrode tab, and the reference electrode tab are respectively connected to the battery protection board through welding, wherein the battery protection board is connected to the positive electrode tab and the reference electrode tab to form the test loop, and/or the battery protection board is connected to the negative electrode tab and the reference electrode tab to form the test loop, to obtain the electrical parameter of the battery.

17. The battery according to claim 16, wherein the battery protection board is further configured to adjust a charging and discharging status of the battery according to the electrical parameter of the battery.

18. The battery according to claim 16 or 17, wherein a positive electrode contact point, a negative electrode contact point, and a reference electrode contact point are arranged on the battery protection board, wherein the positive electrode tab, the negative electrode tab, and the reference electrode tab are respectively connected to the positive electrode contact point, the negative electrode contact point, and the reference electrode contact point through welding.

19. The battery according to any one of claims 1 to 18, wherein the battery further comprises an adhesive layer, and the adhesive layer is configured to fix the reference electrode, the isolator, and the battery cell together.

20. The battery according to any one of claims 1 to 19, wherein the battery further comprises a housing, and the battery cell, the reference electrode, and the isolator are accommodated in the housing.

21. The battery according to claim 20, wherein the battery further comprises an electrolyte solution, and the electrolyte solution is accommodated in the housing.

22. A preparation method of a battery having a reference electrode, comprising:
preparing an electrode active layer and a reference electrode tab on a third current collector, to obtain the reference electrode;
arranging an isolator on a surface of one side in a thickness direction of a battery cell, and then placing the reference electrode on the isolator; and
fixing the battery cell, the isolator, and the reference electrode together.

23. The preparation method according to claim 22, further comprising:
encapsulating the battery cell, the isolator, and the reference electrode that are fixed together by using a housing material, injecting an electrolyte solution to obtain an encapsulated battery cell, and welding the encapsulated battery cell to a battery protection board, to obtain the battery.

24. A power consuming device, wherein the power consuming device comprises a power consuming module and the battery according to any one of claims 1 to 22, wherein the battery is configured to supply power to the power consuming module.
